# EUROPÄISCHE PATENTSCHRIFT

(11) **EP 3 052 863 B1**
(45) Veröffentlichungstag und Bekanntmachung des Hinweises auf die Patenterteilung: **18.03.2020**
(21) Anmeldenummer: 14777180.2
(22) Anmeldetag: 09.09.2014
(51) Int. Cl.: F24C 7/06, H05B 3/74, H05B 6/12

(54) **KOCHFELDVORRICHTUNG**
HOB APPARATUS
SYSTÈME DE TABLE DE CUISSON

(30) Priorität: 03.10.2013 ES 201331457
(43) Veröffentlichungstag der Anmeldung: 10.08.2016
(73) Patentinhaber: BSH Hausgeräte GmbH, 81739 München (DE)
(72) Erfinder: ARANDA VAZQUEZ, Sandra, 50018 Zaragoza (ES); ARENAS JIMENEZ, Beatriz, 50196 La Muela (ES); CEAMANOS GAYA, Jesús, 50016 Zaragoza (ES); DIEZ ESTEBAN, Cristina, 50017 Zaragoza (ES); LACASTA BELTRAN, Carlos, 50014 Zaragoza (ES); MARTIN GOMEZ, Damaso, 50012 Zaragoza (ES); MOYA ALBERTIN, Maria Elena, 50002 Zaragoza (ES)
(86) Internationale Anmeldenummer: PCT/IB2014/064337
(87) Internationale Veröffentlichungsnummer: WO 2015/049602

(56) Entgegenhaltungen:
- EP-A2- 1 335 632
- WO-A1-2011/138715
- WO-A1-2012/062881
- DE-A1-102007 032 762

## Beschreibung

Die Erfindung geht aus von einer Kochfeldvorrichtung, insbesondere einer Induktionskochfeldvorrichtung, nach dem Oberbegriff des Anspruchs 1.

Es ist bereits eine Kochfeldvorrichtung, und zwar eine Induktionskochfeldvorrichtung, mit einem Heizelement, das zu einem Erhitzen von Gargeschirr vorgesehen ist, mit einem Raumteilerelement, das in einer Einbaulage zu einem Tragen des Heizelements vorgesehen ist, und mit einer Befestigungseinheit, die dazu vorgesehen ist, das Heizelement und das Raumteilerelement aneinander zu befestigen, vorgeschlagen worden.

Aus WO 2012/062881 A1 ist eine Kochvorrichtung mit einer oberen Platte, auf der der Kochbehälter angeordnet ist, einer unteren Platte, die unter der oberen Platte angeordnet ist, und mindestens einer Heizung, die zwischen der oberen Platte und der unteren Platte angeordnet ist bekannt. Zwischen der Heizung und der unteren Platte ist mindestens eine Befestigungsfeder angeordnet, die dazu dient, die Heizung an der unteren Platte zu befestigen. Diese Befestigungsfeder weist einen Körper auf, der auf der unteren Platte sitzt, und einen Träger, auf dem die Heizung montiert ist. An der unteren Platte ist mehr als ein Befestigungsloch angeordnet, das dazu dient, jede Befestigungsfeder an der unteren Platte zu befestigen. Die Befestigungsfeder weist mindestens zwei Füße auf, die an dem Körper angeordnet sind, sich in verschiedene Richtungen erstrecken und die untere Platte von unten umklammern, indem sie durch die Befestigungslöcher geführt werden.

Aus WO 2011/138715 A1 ist ein Induktionskochfeld mit einem Induktor bekannt, welcher einen Spulenträger aufweist. Der Spulenträger weist zumindest eine in axialer Richtung ausgebildete Positioniererhebung auf, welche zum Eingriff in eine Aussparung in einer Trägerplatte für den Spulenträger ausgebildet ist. Im zusammengesetzten Zustand ist eine Relativpositionierung zwischen dem Spulenträger und der Trägerplatte durch die Positioniererhebung ausgebildet.

Aus DE 10 2007 032 762 A1 ist eine Heizeinheitsbefestigungsvorrichtung, insbesondere für eine Kochvorrichtung, bekannt, mit einem Tragkörper zum Tragen einer Heizkörpereinheit und eine Stützeinheit, die zur direkten Kopplung mit der Heizkörpereinheit vorgesehen ist und mittels welcher die Heizkörpereinheit an dem Tragkörper abgestützt ist, wobei die Stützeinheit zumindest ein gummielastisches Element aufweist.

Aus EP 1 335 632 A2 ist eine Befestigungsvorrichtung für insbesondere flächige elektrische Heizeinrichtungen bekannt, wobei Befestigungsmittel zur Befestigung der Heizeinrichtung an einem Montageträger vorgesehen sind, die derart ausgebildet sind, dass die Befestigung der Heizeinrichtung an dem Montageträger von der Position her variabel ist.

Die Aufgabe der Erfindung besteht insbesondere darin, eine gattungsgemäße Vorrichtung mit einer vorteilhaften Konstruktion bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Kochfeldvorrichtung, insbesondere einer Induktionskochfeldvorrichtung, mit zumindest einem Heizelement, das zu einem Erhitzen von Gargeschirr vorgesehen ist, mit zumindest einem Raumteilerelement, das in einer Einbaulage zu einem Tragen des zumindest einen Heizelements vorgesehen ist, und mit einer Befestigungseinheit, die dazu vorgesehen ist, das zumindest eine Heizelement und das zumindest eine Raumteilerelement aneinander zu befestigen.

Die Befestigungseinheit ist zumindest teilweise als Verriegelungseinheit ausgebildet. Unter einem "Heizelement" soll insbesondere ein Element verstanden werden, das dazu vorgesehen ist, zumindest in einem Betriebsmodus elektrische Energie zumindest zu einem Großteil an ein Gargeschirr, vorzugsweise durch zumindest einen eine Kochfläche ausbildenden Grundkörper hindurch, zu übertragen und/oder elektrische Energie in Wärme umzuwandeln, um insbesondere zumindest ein aufgestelltes Gargeschirr, vorzugsweise durch zumindest einen eine Kochfläche ausbildenden Grundkörper hindurch, zu erhitzen. Insbesondere ist das Heizelement dazu vorgesehen, in zumindest einem Betriebsmodus, in dem das Heizelement an eine Versorgungselektronik angeschlossen ist, eine Leistung von zumindest 100 W, insbesondere zumindest 500 W, vorteilhaft zumindest 1000 W und vorzugsweise zumindest 1500 W zu übertragen. Insbesondere ist das Heizelement als ein Induktionsheizelement ausgebildet.

Insbesondere umfasst die Kochfeldvorrichtung zumindest zwei, insbesondere zumindest drei, vorteilhaft zumindest vier und besonders vorteilhaft zumindest sechs Heizelemente. Unter einem "Raumteilerelement" soll insbesondere ein Element verstanden werden, das dazu vorgesehen ist, zumindest in montiertem Zustand zumindest einen Raum, insbesondere zumindest einen Lagerraum, in zumindest zwei Teilräume zu unterteilen. Insbesondere ist das Raumteilerelement zusätzlich dazu vorgesehen, in einer Einbaulage zumindest einen Großteil einer Gewichtskraft des zumindest einen Heizelements aufzunehmen und/oder das zumindest eine Heizelement in zumindest einer festgelegten Position zu halten und insbesondere die von dem zumindest einen Heizelement aufgenommene Gewichtskraft an zumindest eine weitere Einheit, insbesondere an zumindest eine Gehäuseeinheit, zu übertragen und/oder abzuleiten. Insbesondere ist das Heizelement zumindest in montiertem Zustand und in einer Einbaulage zumindest größtenteils auf dem Raumteilerelement angeordnet. Die Kochfeldvorrichtung weist insbesondere zumindest einen Grundkörper und vorteilhaft zusätzlich zumindest eine Gehäuseeinheit auf. Vorzugsweise ist die Gehäuseeinheit dazu vorgesehen, zumindest in montiertem Zustand gemeinsam mit dem Grundkörper, zumindest einen Teil eines Außengehäuses, insbesondere eines Kochfeldaußengehäuses, auszubilden. Insbesondere begrenzen die Gehäuseeinheit und der Grundkörper gemeinsam zumindest einen, insbesondere als Hohlraum ausgebildeten Lagerraum zu einer Lagerung von Bauteilen, beispielsweise des Heizelements, zumindest einer Steuereinheit und/oder zumindest einer Kochfeldelektronik. Unter einer "Befestigungseinheit" soll insbesondere eine Einheit verstanden werden, die dazu vorgesehen ist, das Heizelement und das Raumteilerelement zumindest in montiertem Zustand formschlüssig und/oder kraftschlüssig, vorzugsweise werkzeuglos lösbar, aneinander zu befestigen. Die Befestigungseinheit ist insbesondere dazu vorgesehen, zumindest eine Bewegung des Heizelements und des Raumteilerelements relativ zueinander zumindest in einer Raumrichtung, insbesondere in zumindest zwei Raumrichtungen und vorteilhaft in zumindest drei Raumrichtungen zumindest im Wesentlichen zu verhindern, insbesondere zu blockieren. Vorteilhaft ist die Befestigungseinheit dazu vorgesehen, das Heizelement und das Raumteilerelement zumindest in montiertem Zustand miteinander zu verriegeln. Die Befestigungseinheit weist insbesondere zumindest ein Befestigungselement auf, das als Verriegelungselement ausgebildet ist. Vorteilhaft ist das Befestigungselement dazu vorgesehen, durch zumindest eine Positionsveränderung und/oder durch zumindest eine Formveränderung zumindest eine formschlüssige Verbindung zwischen dem Heizelement und dem Raumteilerelement herzustellen. Insbesondere ist das Befestigungselement als ein von einer Schraube differierendes Element ausgebildet. Beispielsweise könnte die Positionsänderung als zumindest eine Linearbewegung ausgebildet sein. Vorzugsweise ist die Positionsänderung als zumindest eine Drehbewegung ausgebildet, und zwar insbesondere um eine Achse, welche außerhalb des Befestigungselements liegt. Insbesondere ist das Befestigungselement dazu vorgesehen, bei einem Montagevorgang von zumindest einer ersten Position, insbesondere auslenkungsfrei und/oder verformungsfrei, in zumindest eine zweite Position bewegt zu werden. Insbesondere sind das Heizelement und das Raumteilerelement in der ersten Position des Befestigungselements in unverriegeltem Zustand angeordnet. Insbesondere sind das Heizelement und das Raumteilerelement in der zweiten Position des Befestigungselements in verriegeltem Zustand angeordnet. Unter der Wendung, dass die Befestigungseinheit "zumindest teilweise" als Verriegelungseinheit ausgebildet ist, soll insbesondere verstanden werden, dass die Befestigungseinheit zusätzlich zu einer Ausbildung als Verriegelungseinheit noch als zumindest eine weitere Einheit ausgebildet sein könnte. Beispielsweise könnte die Befestigungseinheit zusätzlich als Rasteinheit ausgebildet und dazu vorgesehen sein, das Heizelement und das Raumteilerelement zumindest in montiertem Zustand miteinander zu verrasten und/oder formschlüssig miteinander zu verbinden. Ebenfalls denkbar ist, dass die Befestigungseinheit zusätzlich als Klemmeinheit ausgebildet und dazu vorgesehen ist, das Heizelement und das Raumteilerelement zumindest in montiertem Zustand kraftschlüssig und/oder durch zumindest eine Klemmverbindung miteinander zu verbinden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann eine Kochfeldvorrichtung mit einer vorteilhaften Konstruktion bereitgestellt werden. Insbesondere können eine kurze Montagezeit und/oder eine hohe Flexibilität erreicht werden. Insbesondere kann eine einfache und/oder schnell durchführbare und/oder werkzeuglos durchführbare Montage erreicht werden. Insbesondere kann eine einfache und/oder schnelle Demontage erreicht werden, wodurch insbesondere ein Wartungsaufwand reduziert werden kann. Insbesondere kann die Befestigungseinheit für verschiedene Typen von Heizelementen angewendet werden, wodurch eine umweltschonende und/oder preiswerte Ausgestaltung erreicht werden kann. Insbesondere kann eine Vormontage vermieden werden. Insbesondere kann eine maschinelle und/oder automatisierte Montage des Heizelements und des Raumteilerelements ermöglicht werden.

Erfindungsgemäß ist die Befestigungseinheit dazu vorgesehen, das zumindest eine Heizelement und das zumindest eine Raumteilerelement durch eine Drehbewegung des zumindest einen Heizelements und des zumindest einen Raumteilerelements relativ zueinander aneinander zu befestigen. Insbesondere ist das Befestigungselement dazu vorgesehen, bei einer Drehbewegung um zumindest eine Drehachse, die zumindest im Wesentlichen senkrecht zu zumindest einer Oberfläche des Raumteilerelements und/oder des Heizelements ausgerichtet ist, um einen Winkel von weniger als 120°, insbesondere um weniger als 90° bewegt zu werden. Unter der Wendung, dass eine Gerade und/oder Ebene "zumindest im Wesentlichen senkrecht" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene bei einer Projektion auf zumindest eine Projektionsebene, in der zumindest eine der Geraden und/oder eine der Ebenen angeordnet ist, einen Winkel einschließt, der vorzugsweise um weniger als 15°, vorteilhaft um weniger als 10° und insbesondere um weniger als 5° von einem Winkel von 90° abweicht. Dadurch kann insbesondere eine kurze Montagezeit und/oder eine schnell durchführbare Montage und/oder Demontage erreicht werden.

Zudem wird vorgeschlagen, dass die Drehbewegung auf einen Winkelbereich von maximal 30°, insbesondere von maximal 25°, vorteilhaft von maximal 20°, besonders vorteilhaft von maximal 15°, bevorzugt von maximal 10° und besonders bevorzugt von maximal 7° begrenzt ist. Insbesondere ist die Drehbewegung auf einen Winkelbereich von mindestens 2°, insbesondere von mindestens 3° und vorteilhaft von mindestens 4° begrenzt. Dadurch können das Heizelement und das Raumteilerelement insbesondere auf engstem Raum aneinander befestigt werden. Insbesondere kann eine flexible und/oder platzsparende Ausgestaltung erreicht werden.

Weiterhin wird vorgeschlagen, dass die Befestigungseinheit zumindest ein Befestigungselement aufweist, das an dem zumindest einen Heizelement angeordnet, insbesondere befestigt, ist und in verriegeltem Zustand durch das zumindest eine Raumteilerelement zumindest teilweise hindurchgreift. Unter der Wendung, dass das Befestigungselement zumindest in verriegeltem Zustand durch das Raumteilerelement "zumindest teilweise" hindurchgreift, soll insbesondere verstanden werden, dass das Befestigungselement zumindest in verriegeltem Zustand in das Raumteilerelement eingreift und/oder durch das Raumteilerelement hindurchgreift. Insbesondere greift das Befestigungselement zumindest in verriegeltem Zustand durch das Raumteilerelement hindurch. Dadurch kann insbesondere eine stabile und/oder langlebige Befestigung zwischen dem Heizelement und dem Raumteilerelement erreicht werden.

Ferner wird vorgeschlagen, dass das zumindest eine Befestigungselement zumindest im Wesentlichen einstückig mit dem zumindest einen Heizelement ausgebildet ist. Unter "zumindest im Wesentlichen" einstückig soll insbesondere einstückig und/oder werkzeuglos untrennbar miteinander verbunden verstanden werden. Beispielsweise könnten das Befestigungselement und das Heizelement mittels zumindest einer Klebeverbindung miteinander untrennbar verbunden sein. Alternativ sind weitere, einem Fachmann als sinnvoll erscheinende Verbindungen denkbar. Vorteilhaft sind das Befestigungselement und das Heizelement einstückig ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Dadurch kann insbesondere eine hohe Stabilität erreicht werden.

Zudem wird vorgeschlagen, dass das zumindest eine Raumteilerelement zumindest eine Ausnehmung zu einer Aufnahme des zumindest einen Befestigungselements aufweist. Insbesondere greift das Befestigungselement zumindest in verriegeltem Zustand durch die Ausnehmung des Raumteilerelements zumindest teilweise hindurch. Insbesondere weist die Ausnehmung bei Betrachtung einer Projektion in zumindest eine Ebene eine Flächenerstreckung von weniger als 10 cm², insbesondere von weniger als 7 cm², vorteilhaft von weniger als 5 cm² und besonders vorteilhaft von weniger als 3 cm² auf. Dadurch kann insbesondere eine einfache und/oder schnelle Montage erreicht werden. Insbesondere kann eine unauffällige und/oder stabile Ausgestaltung erreicht werden.

Insbesondere kann eine Beeinträchtigung einer Funktion, insbesondere einer Abschirmfunktion, des Raumteilerelements durch die Ausnehmung vermieden werden.

Weiterhin wird vorgeschlagen, dass das zumindest eine Heizelement zumindest ein Stabilisationselement umfasst, das zu einer Stabilisierung einer Befestigung zwischen dem zumindest einen Heizelement und dem zumindest einen Raumteilerelement vorgesehen ist. Insbesondere ist das Stabilisationselement, insbesondere zusätzlich zu einer Stabilisierung einer Befestigung zwischen dem Heizelement und dem Raumteilerelement, zu einer Ausrichtung des Heizelements und des Raumteilerelements relativ zueinander vorgesehen. Vorzugsweise definiert das zumindest eine Stabilisationselement eine Drehachse, um die das zumindest eine Heizelement und das zumindest eine Raumteilerelement relativ zueinander drehbar gelagert sind. Dadurch kann insbesondere eine hohe Stabilität und/oder eine kurze Montagezeit erreicht werden.

Ferner wird vorgeschlagen, dass die Befestigungseinheit zumindest ein Schutzelement aufweist, das dazu vorgesehen ist, in montiertem Zustand eine Sollposition des zumindest einen Heizelements und des zumindest einen Raumteilerelements relativ zueinander zu sichern. Insbesondere greift das zumindest eine Schutzelement zumindest in verriegeltem Zustand zumindest teilweise in das Raumteilerelement hinein und/oder durch das Raumteilerelement hindurch. Vorzugsweise weist das Raumteilerelement zumindest zwei Schutzausnehmungen zumindest zu einer Aufnahme des Schutzelements auf, welche insbesondere benachbart zueinander angeordnet sind. Vorzugsweise weisen die Schutzausnehmungen einen gegenseitigen Abstand von weniger als 2 cm, insbesondere von weniger als 1 cm, vorteilhaft von weniger als 0,5 cm und vorzugsweise von weniger als 0,3 cm auf. Das Schutzelement ist insbesondere dazu vorgesehen, bei einer Verriegelungsbewegung von zumindest einer ersten Position in zumindest eine zweite Position bewegt zu werden, wobei das Schutzelement in der ersten Position insbesondere in einer ersten der Schutzausnehmungen und in der zweiten Position insbesondere in einer zweiten der Schutzausnehmungen angeordnet ist. Insbesondere ist das Schutzelement dazu vorgesehen, bei einer Bewegung von der ersten Position in die zweite Position insbesondere elastisch ausgelenkt und/oder verformt zu werden. Vorzugsweise ist das Schutzelement als Rastelement ausgebildet. Unter einer "Sollposition" des Heizelements soll insbesondere eine Position verstanden werden, in welcher das Heizelement zumindest in verriegeltem und/oder montiertem Zustand anzuordnen ist, insbesondere um eine zumindest im Wesentlichen Übereinstimmung zwischen der Position des Heizelements mit Markierungen auf dem eine Kochfläche ausbildenden Grundkörper zu erreichen. Dadurch kann insbesondere eine ungewollte Bewegung des Heizelements und des Raumteilerelements in verriegeltem Zustand relativ zueinander vermieden werden.

Zudem wird vorgeschlagen, dass das zumindest eine Raumteilerelement als Abschirmelement ausgebildet ist. Insbesondere ist das Raumteilerelement dazu vorgesehen, zumindest eine Steuereinheit gegenüber von zumindest einem Heizelement verursachter elektromagnetischer Strahlung, insbesondere Wärmestrahlung und/oder Magnetfeldern, abzuschirmen. Insbesondere ist das Raumteilerelement zumindest teilweise aus elektrisch leitfähigem Material, insbesondere aus Metall, und vorzugsweise zusätzlich aus einem unmagnetischen Material, vorteilhaft aus Aluminium, alternativ aus Kupfer, ausgebildet. Alternativ sind weitere, einem Fachmann als sinnvoll erscheinende Materialien denkbar. Dadurch kann insbesondere eine hohe Sicherheit und/oder eine langlebige Ausgestaltung erreicht werden. Insbesondere kann eine durch Ausnehmungen in dem Raumteilerelement hervorgerufene Beeinträchtigung einer Abschirmfunktion des Raumteilerelements aufgrund einer geringen Größe der Ausnehmung vermieden werden.

Es zeigen:
- Fig. 1: ein Kochfeld mit einer erfindungsgemäßen Kochfeldvorrichtung in einer schematischen Draufsicht,
- Fig. 2: einen Ausschnitt eines Raumteilerelements der Kochfeldvorrichtung aus Fig. 1 in einer schematischen Draufsicht,
- Fig. 3: ein Heizelement der Kochfeldvorrichtung aus Fig. 1 von einer Unterseite in einer schematischen Darstellung,
- Fig. 4: das Heizelement aus Fig. 3 in unverriegeltem Zustand in einer schematischen Darstellung,
- Fig. 5: einen Ausschnitt des Heizelements aus Fig. 4 in unverriegeltem Zustand in einer schematischen Darstellung,
- Fig. 6: einen weiteren Ausschnitt des Heizelements aus Fig. 4 in unverriegeltem Zustand in einer schematischen Darstellung,
- Fig. 7: das Heizelement aus Fig. 3 in verriegeltem Zustand in einer schematischen Darstellung,
- Fig. 8: einen Ausschnitt des Heizelements aus Fig. 7 in verriegeltem Zustand in einer schematischen Darstellung,
- Fig. 9: einen weiteren Ausschnitt des Heizelements aus Fig. 7 in verriegeltem Zustand in einer schematischen Darstellung,
- Fig. 10: ein weiteres Ausführungsbeispiel eines Kochfelds mit einer weiteren erfindungsgemäßen Kochfeldvorrichtung in einer schematischen Draufsicht,
- Fig. 11: einen weiteren Ausschnitt eines Raumteilerelements der erfindungsgemäßen Kochfeldvorrichtung aus Fig. 1 in einer schematischen Draufsicht,
- Fig. 12: ein Heizelement der erfindungsgemäßen Kochfeldvorrichtung aus Fig. 10 von einer Unterseite in einer schematischen Darstellung,
- Fig. 13: das Heizelement aus Fig. 11 in unverriegeltem Zustand in einer schematischen Darstellung und
- Fig. 14: das Heizelement aus Fig. 11 in verriegeltem Zustand in einer schematischen Darstellung.

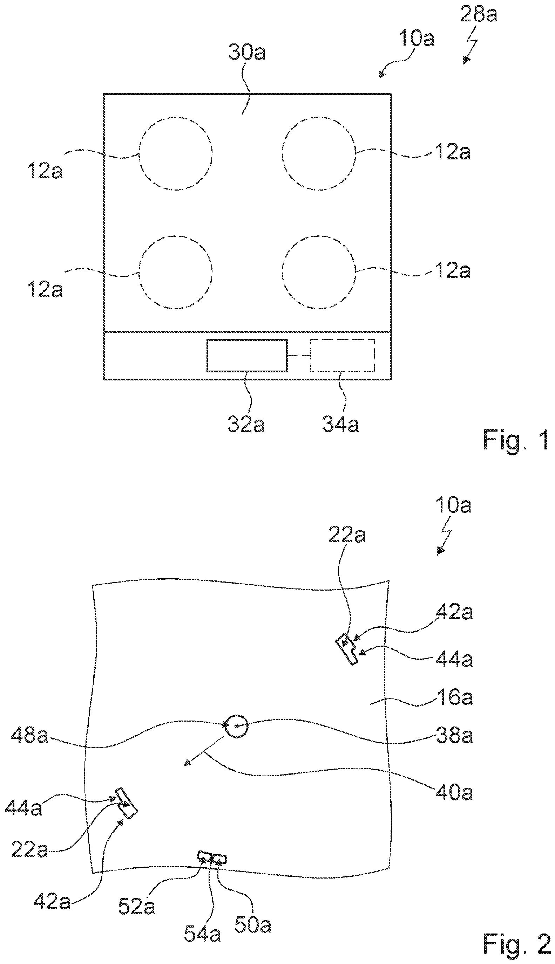

Fig. 1 zeigt ein Kochfeld 28a, das als Induktionskochfeld ausgebildet ist, mit einer erfindungsgemäßen Kochfeldvorrichtung 10a, die als Induktionskochfeldvorrichtung ausgebildet ist. Die Kochfeldvorrichtung 10a weist einen Grundkörper 30a zu einem Aufstellen von Gargeschirren auf. Der Grundkörper 30a ist als Kochfeldplatte ausgebildet. Der Grundkörper 30a bildet eine Kochfläche aus.

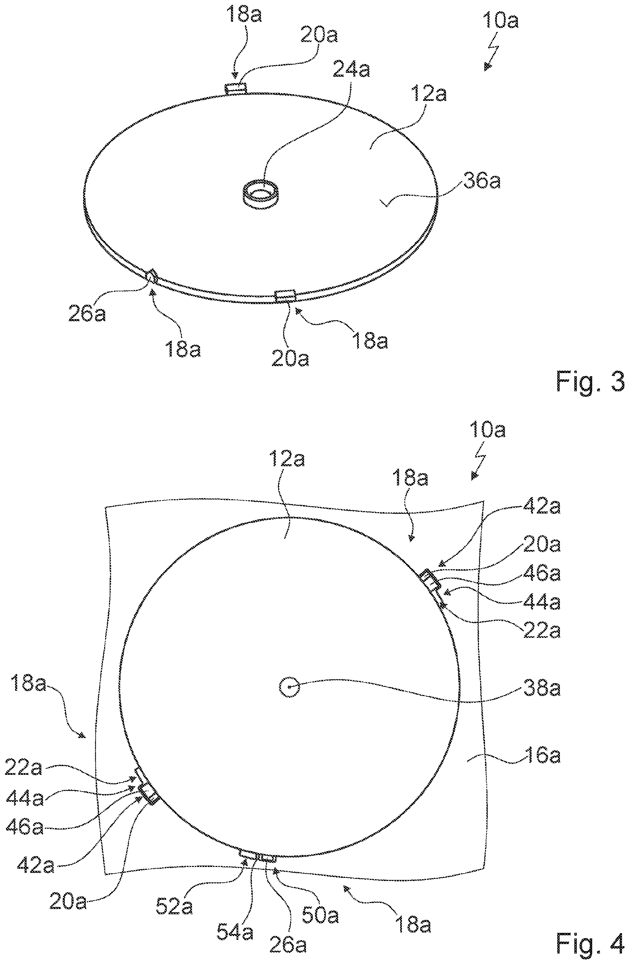

Die Kochfeldvorrichtung 10a weist eine Bedieneinheit 32a zu einer Eingabe und/oder Auswahl von Betriebsparametern, beispielsweise einer Heizleistung und/oder einer Heizleistungsdichte und/oder einer Heizzone, auf (vgl. Fig. 3). Die Bedieneinheit 32 ist zu einer Ausgabe eines Werts eines Betriebsparameters an einen Bediener vorgesehen. Die Kochfeldvorrichtung 10a weist eine Steuereinheit 34a auf, die dazu vorgesehen ist, in Abhängigkeit von mittels der Bedieneinheit 32a eingegebener Betriebsparameter Aktionen auszuführen und/oder Einstellungen zu verändern.

Die Kochfeldvorrichtung 10 umfasst vier Heizelemente 12a, die zu einem Erhitzen von Gargeschirr vorgesehen sind. Die Heizelemente 12a, die als Induktionsheizelemente ausgebildet sind, sind unterhalb des Grundkörpers 30a angeordnet. Die Heizelemente 12a weisen jeweils eine im Wesentlichen runde Gestalt auf.

Die Kochfeldvorrichtung 10a umfasst ein Raumteilerelement 16a, das in einer Einbaulage zu einem Tragen der Heizelemente 12a vorgesehen ist (vgl. Fig. 2). Das Raumteilerelement 16a ist in einem montierten Zustand parallel zum Grundkörper 30a ausgerichtet. Jedes Heizelement 12a weist eine Unterseite 36a auf. Die Heizelemente 12a sind in montiertem Zustand mit der Unterseite 36a in direktem Kontakt mit dem Raumteilerelement 16a angeordnet. Die Heizelemente 12a sind in montiertem Zustand auf einer dem Grundkörper 30a zugewandten Seite des Raumteilerelements 16a angeordnet. Die Steuereinheit 34a ist in montiertem Zustand auf einer dem Grundkörper 30a abgewandten Seite des Raumteilerelements 16a angeordnet. Das Raumteilerelement 16a ist in montiertem Zustand zwischen den Heizelementen 12a und der Steuereinheit 34a angeordnet. Das Raumteilerelement 16a ist als Platte ausgebildet. Das Raumteilerelement 16a schirmt in einem Betriebszustand die Steuereinheit 34a gegen von den Heizelementen 12a verursachte elektromagnetische Strahlung ab. Das Raumteilerelement 16a ist als Abschirmelement ausgebildet. Die Heizelemente 12a sind in montiertem Zustand an dem Raumteilerelement 16a befestigt.

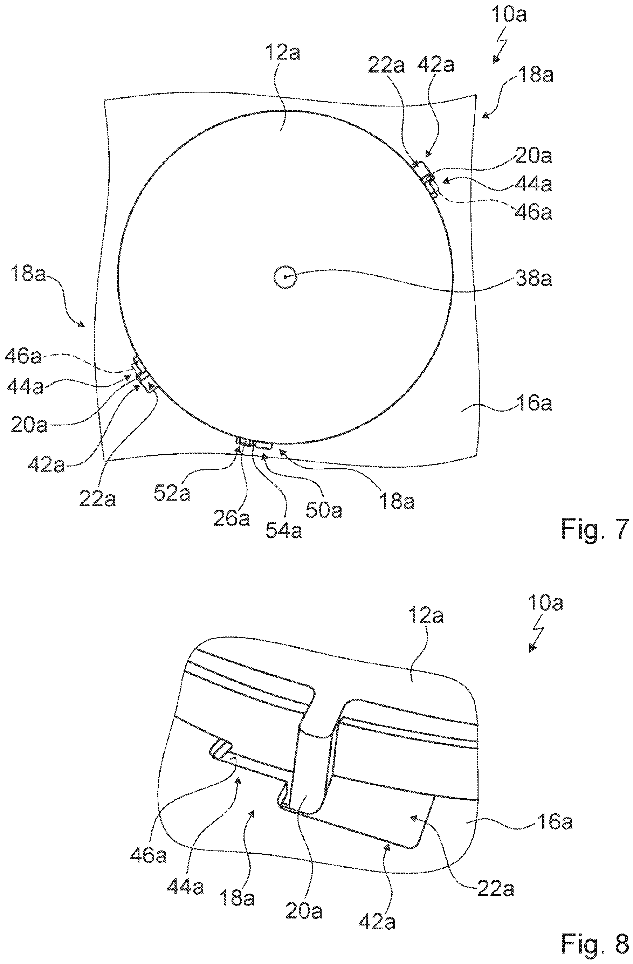

Die Kochfeldvorrichtung 10a umfasst eine Befestigungseinheit 18a, die die Heizelemente 12a und das Raumteilerelement 16a aneinander befestigt. Die Befestigungseinheit 18a befestigt in montiertem Zustand die Heizelemente 12a und das Raumteilerelement 16a werkzeuglos lösbar aneinander. Die Befestigungseinheit 18a ist teilweise als Verriegelungseinheit ausgebildet. Die Befestigungseinheit 18a verriegelt die Heizelemente 12a und das Raumteilerelement 16a miteinander. Die Befestigungseinheit 18a befestigt die Heizelemente 12a und das Raumteilerelement 16a durch Drehbewegungen der Heizelemente 12a und des Raumteilerelements 16a relativ zueinander aneinander. Die Drehbewegungen sind auf einen Winkelbereich von 10° beschränkt (vgl. Fig. 4 und 7). Die Drehbewegungen erfolgen jeweils um eine Drehachse 38a. Die Drehachsen 38a verlaufen in montiertem Zustand durch einen Mittelpunkt der Heizelemente 12a. Die Drehachsen 38a verlaufen im Wesentlichen senkrecht zu einer Oberfläche des Raumteilerelements 16a.

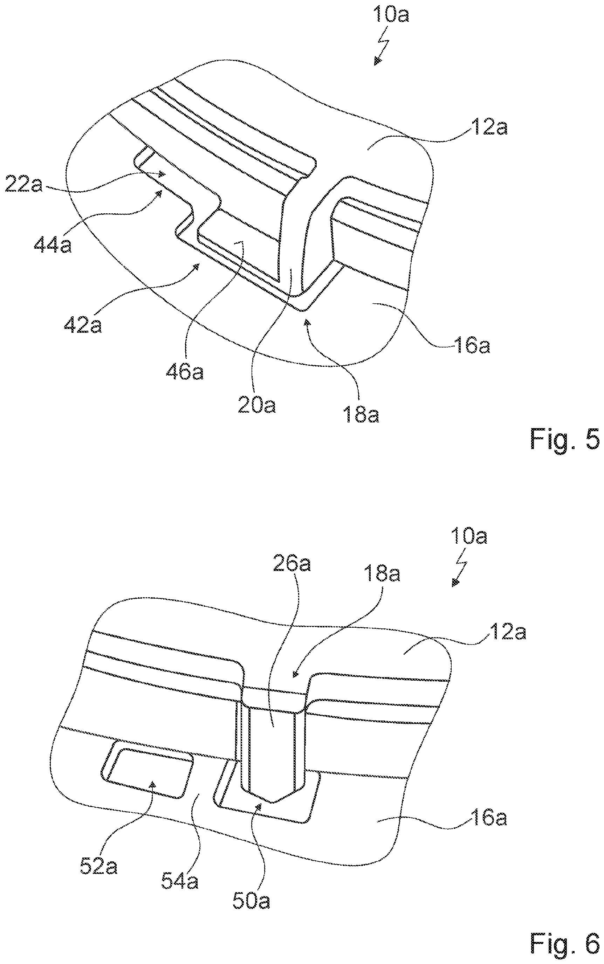

Die Befestigungseinheit 18a weist acht Befestigungselemente 20a auf, die zu einer Befestigung der Heizelemente 12a und des Raumteilerelements 16a miteinander vorgesehen sind (vgl. Fig. 3 und 5). Jeweils zwei der Befestigungselemente 20a sind an einem der Heizelemente 12a angeordnet. Die Befestigungselemente 20a sind an den Heizelementen 12a befestigt. Die Befestigungselemente 20a sind im Wesentlichen einstückig mit den Heizelementen 12a ausgebildet. Die Befestigungselemente 20a sind an zwei einander radial gegenüberliegenden Seiten der Heizelemente 12a an den Heizelementen 12a angeordnet. Die Befestigungselemente 20a ragen über die Unterseite 36a der Heizelemente 12a hinaus (vgl. Fig. 3). Die Befestigungselemente 20a greifen in verriegeltem Zustand durch das Raumteilerelement 16a teilweise hindurch (vgl. Fig. 8). Jedes Befestigungselement 20a weist eine Befestigungsfläche 46a auf, die in montiertem Zustand in direktem Kontakt mit einer dem Heizelement 12a abgewandten Seite des Raumteilerelements 16a angeordnet ist.

Das Raumteilerelement 16a weist acht Ausnehmungen 22a zu einer Aufnahme der Befestigungselemente 20a auf (vgl. Fig. 2, hier jedoch lediglich zwei sichtbar). Die Ausnehmungen 22a weisen zwei Bereiche 42a, 44a mit in radialer Richtung 40a unterschiedlichen Erstreckungen auf. In einem ersten der Bereiche 42a weist die Ausnehmung 22a eine größere der Erstreckungen auf. Der erste Bereich 42a dient zu einem Einbringen der Befestigungselemente 20a. In einem zweiten der Bereiche 44a weist die Ausnehmung 22a eine kleinere der Erstreckungen auf. In verriegeltem Zustand sind die Befestigungselemente 20a in dem zweiten Bereich 44a angeordnet. Die Befestigungselemente 20a greifen in verriegeltem Zustand in dem zweiten Bereich 44a unter das Raumteilerelement 16a. Die Befestigungselemente 20a sind in verriegeltem Zustand mittels der Befestigungsflächen 46a in direktem Kontakt mit dem Raumteilerelement 16a angeordnet. Die Befestigungselemente 20a stellen in verriegeltem Zustand eine formschlüssige und kraftschlüssige Verbindung zwischen den Heizelementen 12a und dem Raumteilerelement 16a her (vgl. Fig. 7 und 8). Alternativ ist denkbar, dass die Befestigungselemente 20a in verriegeltem Zustand lediglich eine formschlüssige Verbindung zwischen den Heizelementen 12a und dem Raumteilerelement 16a herstellen.

Jedes Heizelement 12a umfasst ein Stabilisationselement 24a (vgl. Fig. 3). Die Stabilisationselemente 24a sind an den Heizelementen 12a angeordnet. Die Stabilisationselemente 24a sind an den Heizelementen 12a befestigt. Die Stabilisationselemente 24a sind im Wesentlichen einstückig mit den Heizelementen 12a ausgebildet. Die Stabilisationselemente 24a sind an den Unterseiten 36a der Heizelemente 12a angeordnet. Die Stabilisationselemente 24a ragen über die Unterseite 36a hinaus. Die Stabilisationselemente 24a sind im Wesentlichen zylinderförmig ausgebildet. Die Stabilisationselemente 24a sind im Wesentlichen unterhalb eines Mittelpunkts der Heizelemente 12a angeordnet. Die Drehachsen 38a verlaufen durch die Stabilisationselemente 24a. Die Stabilisationselemente 24a sind zu einer Stabilisierung einer Befestigung zwischen den Heizelementen 12a und dem Raumteilerelement 16a vorgesehen. Die Stabilisationselemente 24a greifen in montiertem Zustand durch das Raumteilerelement 16a im Wesentlichen hindurch. Das Raumteilerelement 16a weist vier Stabilisationsausnehmungen 48a zu einer Aufnahme der Stabilisationselemente 24a auf (vgl. Fig. 2, hier jedoch nur eine sichtbar). Die Stabilisationselemente 24a sind in montiertem Zustand im Wesentlichen konzentrisch um die Drehachsen 38a angeordnet.

Die Befestigungseinheit 18a weist vier Schutzelemente 26a auf (vgl. Fig. 3, 6 und 9). Die Schutzelemente 26a sind an den Heizelementen 12a angeordnet. Die Schutzelemente 26a sind an den Heizelementen 12a befestigt. Jeweils ein Schutzelement 26a ist im Wesentlichen einstückig mit jeweils einem Heizelement 12a ausgebildet. Alternativ ist denkbar, dass das Schutzelement an dem Raumteilerelement angeordnet ist. Die Schutzelemente 26a ragen über die Unterseite 36a der Heizelemente 12a hinaus. Die Schutzelemente 26a sichern in montiertem Zustand eine Sollposition der Heizelemente 12a und des Raumteilerelements 16a relativ zueinander.

Die Schutzelemente 26a greifen in montiertem Zustand teilweise durch das Raumteilerelement 16a hindurch. Das Raumteilerelement 16a weist vier erste Schutzausnehmungen 50a und vier zweite Schutzausnehmungen 52a zu einer Aufnahme der Schutzelemente 26a auf (vgl. Fig. 2). Jeweils eine erste Schutzausnehmung 50a und eine zweite Schutzausnehmung 52a sind benachbart angeordnet. Das Raumteilerelement 16a bildet in einem Bereich der benachbart angeordneten Schutzausnehmungen 50a, 52a einen Steg 54a aus, der die erste Schutzausnehmung 50a und die zweite Schutzausnehmung 52a voneinander beabstandet.

In einem Verfahren zur Montage der Kochfeldvorrichtung 10a werden die Heizelemente 12a und das Raumteilerelement 16a aneinander verriegelt. In einem ersten Verfahrensschritt werden die Heizelemente 12a über dem Raumteilerelement 16a positioniert. Hierbei wird darauf geachtet, dass die Befestigungselemente 20a an zu den Ausnehmungen 22a korrespondierenden Stellen angeordnet sind. Anschließend werden die Heizelemente 12a dem Raumteilerelement 16 genähert, wobei die Unterseiten 36a der Heizelemente 12a in Richtung des Raumteilerelements 16a gewandt sind. Die Heizelemente 12a werden dem Raumteilerelement 16a so lange genähert, bis die Unterseiten 36a auf dem Raumteilerelement 16a aufliegen. Liegen die Heizelemente 12a auf dem Raumteilerelement 16a auf, so sind die Befestigungselemente 20a in den ersten Bereichen 42a der Ausnehmungen 22a des Raumteilerelements 16a angeordnet. Die Stabilisationselemente 24a sind in den Stabilisationsausnehmungen 48a angeordnet. Die Schutzelemente 26a sind in den ersten Schutzausnehmungen 50a angeordnet (vgl. Fig. 4 bis 6). Dieser Zustand wird als unverriegelter Zustand bezeichnet.

Ausgehend von dem unverriegelten Zustand werden die Heizelemente 12a um die Drehachsen 38a gedreht. Die Drehbewegungen erfolgen über einen Winkelbereich von im Wesentlichen 10°. Bei den Drehbewegungen werden die Befestigungselemente 20a von dem ersten Bereich 42a der Ausnehmung 22a in den zweiten Bereich 44a der Ausnehmung 22a bewegt. In dem zweiten Bereich 44a sind die Befestigungsflächen 46a in direktem Kontakt mit der den Heizelementen 12a abgewandten Seite des Raumteilerelements 16a angeordnet (vgl. Fig. 7 bis 9). In verriegeltem Zustand untergreifen die Befestigungselemente 20a das Raumteilerelement 16a. Bei den Drehbewegungen werden die Schutzelemente 26a von den ersten Schutzausnehmungen 50a in die zweiten Schutzausnehmungen 52a bewegt. Hierbei werden die Schutzelemente 26a über den Steg 54a hinwegbewegt. Der Steg 54a verhindert ein Zurückkehren der Schutzelemente 26a in die ersten Schutzausnehmungen 50a. Dieser Zustand wird als verriegelter Zustand bezeichnet. In verriegeltem Zustand ist eine Sollposition der Heizelemente 12a und des Raumteilerelements 16a relativ zueinander erreicht. Die Schutzelemente 26a verhindern ein ungewolltes Lösen aus der Sollposition.

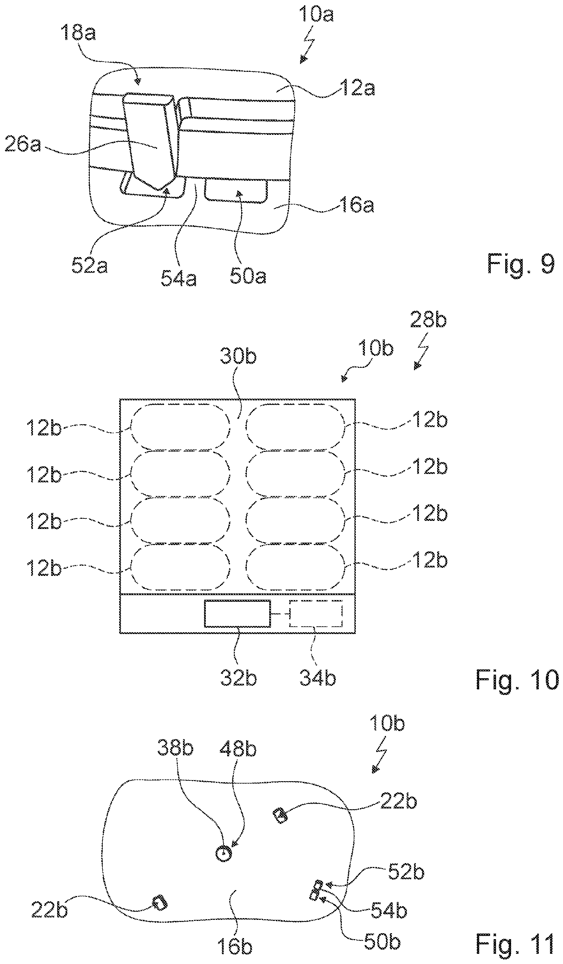

In Fig. 10 bis 14 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 10 verwiesen werden kann. Zur Unterscheidung der Ausführungsbeispiele ist der Buchstabe a in den Bezugszeichen des Ausführungsbeispiels in den Fig. 1 bis 9 durch den Buchstaben b in den Bezugszeichen des Ausführungsbeispiels der Fig. 10 bis 14 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 9 verwiesen werden.

Fig. 10 zeigt ein erfindungsgemäßes Kochfeld 28b, das als Induktionskochfeld ausgebildet ist, mit einer erfindungsgemäßen Kochfeldvorrichtung 10b, die als Induktionskochfeldvorrichtung ausgebildet ist. Die Kochfeldvorrichtung 10b umfasst acht Heizelemente 12b, die zu einem Erhitzen von Gargeschirr vorgesehen sind. Die Heizelemente 12b sind als längliche Heizelemente 12b ausgebildet. Die Heizelemente 12b weisen eine im Wesentlichen ovale Gestalt auf. Die Heizelemente 12b weisen eine Längserstreckung auf, die größer ist als eine Quererstreckung der Heizelemente 12b.

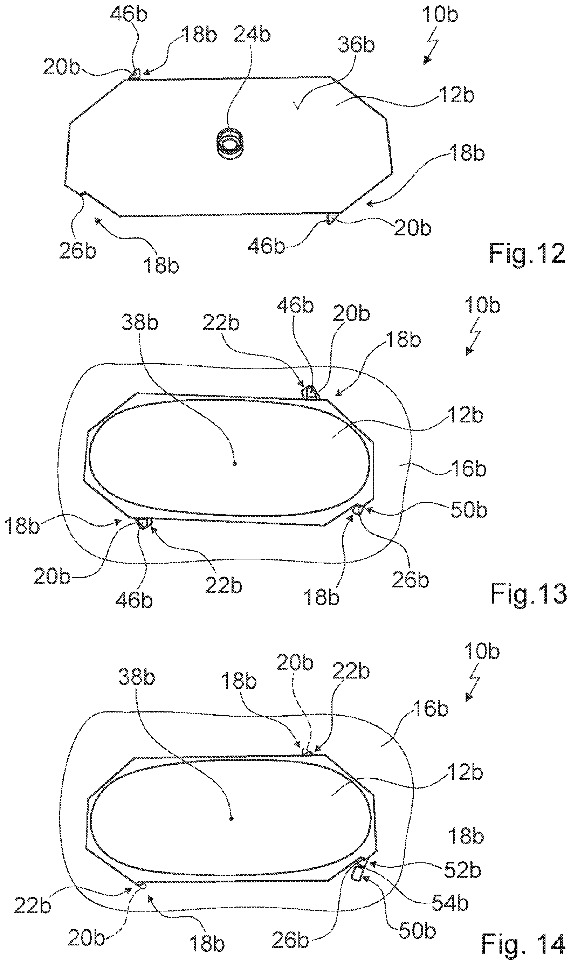

Die Kochfeldvorrichtung 10b umfasst ein als Abschirmelement ausgebildetes Raumteilerelement 16b, das in einer Einbaulage zu einem Tragen der Heizelemente 12b vorgesehen ist (vgl. Fig. 11). Die Heizelemente 12b sind in montiertem Zustand an dem Raumteilerelement 16b befestigt. Die Kochfeldvorrichtung 10b umfasst eine Befestigungseinheit 18b, die die Heizelemente 12b und das Raumteilerelement 16b aneinander befestigt. Die Befestigungseinheit 18b ist teilweise als Verriegelungseinheit ausgebildet. Die Befestigungseinheit 18b befestigt die Heizelemente 12b und das Raumteilerelement 16b durch Drehbewegungen der Heizelemente 12b und des Raumteilerelements 16b relativ zueinander aneinander. Die Drehbewegungen sind auf einen Winkelbereich von 5° beschränkt (vgl. Fig. 13 und 14). Die Drehbewegungen erfolgen um Drehachsen 38b, die in montiertem Zustand durch einen Mittelpunkt der Heizelemente 12a verlaufen.

Die Befestigungseinheit 18b weist sechzehn Befestigungselemente 20b auf, die zu einer Befestigung der Heizelemente 12b und des Raumteilerelements 16b miteinander vorgesehen sind (vgl. Fig. 3 und 5). Jeweils zwei der Befestigungselemente 20b sind an einem der Heizelemente 12b angeordnet. Die Befestigungselemente 20b sind im Wesentlichen einstückig mit den Heizelementen 12b ausgebildet. Die Befestigungselemente 20b ragen über eine Unterseite 36b der Heizelemente 12b hinaus (vgl. Fig. 12). Die Befestigungselemente 20b greifen in verriegeltem Zustand durch das Raumteilerelement 16b teilweise hindurch. Jedes Befestigungselement 20b weist eine Befestigungsfläche 46b auf, die in montiertem Zustand in direktem Kontakt mit einer dem Heizelement 12b abgewandten Seite des Raumteilerelements 16b angeordnet ist.

Das Raumteilerelement 16b weist sechzehn Ausnehmungen 22b zu einer Aufnahme der Befestigungselemente 20b auf (vgl. Fig. 11). Die Ausnehmungen 22b dienen zu einem Einbringen der Befestigungselemente 20b in unverriegeltem Zustand. In verriegeltem Zustand sind die Befestigungselemente 20b teilweise auf einer den Heizelementen 12b abgewandten Seite des Raumteilerelements 16b angeordnet. Die Befestigungselemente 20b sind in verriegeltem Zustand mittels Befestigungsflächen 46b der Befestigungselemente 20b in direktem Kontakt mit dem Raumteilerelement 16b angeordnet.

Jedes Heizelement 12b umfasst ein Stabilisationselement 24b (vgl. Fig. 12), die im Wesentlichen einstückig mit den Heizelementen 12a ausgebildet sind. Die Stabilisationselemente 24b greifen in montiertem Zustand durch das Raumteilerelement 16a im Wesentlichen hindurch. Das Raumteilerelement 16b weist vier Stabilisationsausnehmungen 48b zu einer Aufnahme der Stabilisationselemente 24b auf (vgl. Fig. 11).

Die Befestigungseinheit 18b weist acht Schutzelemente 26b auf (vgl. Fig. 12 bis 14). Jeweils ein Schutzelement 26b ist im Wesentlichen einstückig mit jeweils einem Heizelement 12b ausgebildet. Die Schutzelemente 26b sichern in montiertem Zustand eine Sollposition der Heizelemente 12b und des Raumteilerelements 16b relativ zueinander. Die Schutzelemente 26b greifen in montiertem Zustand teilweise durch das Raumteilerelement 16b hindurch. Das Raumteilerelement 16b weist acht erste Schutzausnehmungen 50b und acht zweite Schutzausnehmungen 52b zu einer Aufnahme der Schutzelemente 26b auf (vgl. Fig. 11). Jeweils eine erste Schutzausnehmung 50b und eine zweite Schutzausnehmung 52b sind benachbart angeordnet. Das Raumteilerelement 16b bildet in einem Bereich der benachbart angeordneten Schutzausnehmungen 50b, 52b einen Steg 54b aus, der die erste Schutzausnehmung 50b und die zweite Schutzausnehmung 52b voneinander beabstandet.

In einem Verfahren zur Montage der Kochfeldvorrichtung 10b werden die Heizelemente 12b und das Raumteilerelement 16b aneinander verriegelt. Ausgehend von einem unverriegelten Zustand (vgl. Fig. 13) werden die Heizelemente 12b um die Drehachse 38b gedreht. Die Drehbewegungen erfolgen über einen Winkelbereich von im Wesentlichen 5°. Bei den Drehbewegungen werden die Befestigungselemente 20b in den Ausnehmungen 22b bewegt, um durch die Drehbewegungen aus den Ausnehmungen 22b teilweise heraus unter das Raumteilerelement 16 bewegt zu werden. Nach erfolgten Drehbewegungen sind die Befestigungselemente 20b teilweise, und zwar mit den Befestigungsflächen 46b, in direktem Kontakt mit der den Heizelementen 12b abgewandte Seite des Raumteilerelements 16b angeordnet (vgl. Fig. 14).

Bei den Drehbewegungen werden die Schutzelemente 26b von den ersten Schutzausnehmungen 50b in die zweiten Schutzausnehmungen 52b bewegt. Hierbei werden die Schutzelemente 26b über den Steg 54b hinwegbewegt. Der Steg 54b verhindert ein Zurückkehren der Schutzelemente 26b in die ersten Schutzausnehmungen 50b. Die Schutzelemente 26b verhindern ein ungewolltes Lösen aus der Sollposition.

### Bezugszeichen

- 10: Kochfeldvorrichtung
- 12: Heizelement
- 16: Raumteilerelement
- 18: Befestigungseinheit
- 20: Befestigungselement
- 22: Ausnehmung
- 24: Stabilisationselement
- 26: Schutzelement
- 28: Kochfeld
- 30: Grundkörper
- 32: Bedieneinheit
- 34: Steuereinheit
- 36: Unterseite
- 38: Drehachse
- 40: Radiale Richtung
- 42: Erster Bereich
- 44: Zweiter Bereich
- 46: Befestigungsfläche
- 48: Stabilisationsausnehmung
- 50: Erste Schutzausnehmung
- 52: Zweite Schutzausnehmung
- 54: Steg

## Patentansprüche

1. Kochfeldvorrichtung, insbesondere Induktionskochfeldvorrichtung, mit zumindest einem Heizelement (12a-b), das zu einem Erhitzen von Gargeschirr vorgesehen ist, mit zumindest einem Raumteilerelement (16a-b), das in einer Einbaulage zu einem Tragen des zumindest einen Heizelements (12a-b) vorgesehen ist, und mit einer Befestigungseinheit (18a-b), die dazu vorgesehen ist, das zumindest eine Heizelement (12a-b) und das zumindest eine Raumteilerelement (16a-b) aneinander zu befestigen, wobei die Befestigungseinheit (18a-b) zumindest teilweise als Verriegelungseinheit ausgebildet ist, **dadurch gekennzeichnet, dass** die Befestigungseinheit (18a-b) dazu vorgesehen ist, das zumindest eine Heizelement (12a-b) und das zumindest eine Raumteilerelement (16a-b) durch eine Drehbewegung des zumindest einen Heizelements (12a-b) und des zumindest einen Raumteilerelements (16a-b) relativ zueinander aneinander zu befestigen.

2. Kochfeldvorrichtung nach Anspruch 1, **dadurch gekennzeichnet, dass** die Drehbewegung auf einen Winkelbereich von maximal 30° begrenzt ist.

3. Kochfeldvorrichtung nach einem der vorhergehenden Ansprüche, **dadurch gekennzeichnet, dass** die Befestigungseinheit (18a-b) zumindest ein Befestigungselement (20a-b) aufweist, das an dem zumindest einen Heizelement (12a-b) angeordnet ist und in verriegeltem Zustand durch das zumindest eine Raumteilerelement (16a-b) zumindest teilweise hindurchgreift.

4. Kochfeldvorrichtung nach Anspruch 3, **dadurch gekennzeichnet, dass** das zumindest eine Befestigungselement (20a-b) zumindest im Wesentlichen einstückig mit dem zumindest einen Heizelement (12a-b) ausgebildet ist.

5. Kochfeldvorrichtung zumindest nach Anspruch 3, **dadurch gekennzeichnet, dass** das zumindest eine Raumteilerelement (16a-b) zumindest eine Ausnehmung (22a-b) zu einer Aufnahme des zumindest einen Befestigungselements (20a-b) aufweist.

6. Kochfeldvorrichtung nach einem der vorhergehenden Ansprüche, **dadurch gekennzeichnet, dass** das zumindest eine Heizelement (12a-b) zumindest ein Stabilisationselement (24a-b) umfasst, das zu einer Stabilisierung einer Befestigung zwischen dem zumindest einen Heizelement (12a-b) und dem zumindest einen Raumteilerelement (16a-b) vorgesehen ist.

7. Kochfeldvorrichtung nach einem der vorhergehenden Ansprüche, **dadurch gekennzeichnet, dass** die Befestigungseinheit (18a-b) zumindest ein Schutzelement (26a-b) aufweist, das dazu vorgesehen ist, in montiertem Zustand eine Sollposition des zumindest einen Heizelements (12a-b) und des zumindest einen Raumteilerelements (16a-b) relativ zueinander zu sichern.

8. Kochfeldvorrichtung nach einem der vorhergehenden Ansprüche, **dadurch gekennzeichnet, dass** das zumindest eine Raumteilerelement (16a-b) als Abschirmelement ausgebildet ist.

9. Kochfeld, insbesondere Induktionskochfeld, mit zumindest einer Kochfeldvorrichtung (10) nach einem der Ansprüche 1 bis 8.

10. Verfahren zur Montage einer Kochfeldvorrichtung (10) nach einem der Ansprüche 1 bis 8, bei dem das zumindest eine Heizelement (12a-b) und das zumindest eine Raumteilerelement (16a-b) aneinander verriegelt werden.

## Claims

1. Hob apparatus, in particular induction hob apparatus, with at least one heating element (12a-b), which is provided for the heating of cooking vessels, with at least one space dividing element (16a-b), which in an installation position is provided to support the at least one heating element (12a-b), and with a fixing unit (18a-b), which is provided to attach the at least one heating element (12a-b) and the at least one space dividing element (16a-b) to each other, wherein the fixing unit (18a-b) is embodied at least in part as a locking unit, **characterised in that** the fixing unit (18a-b) is provided to attach the at least one heating element (12a-b) and the at least one space dividing element (16a-b) to each other by means of a rotational movement of the at least one heating element (12a-b) and of the at least one space dividing element (16a-b) relative to each other.

2. Hob apparatus according to claim 1, **characterised in that** the rotational movement is limited to an angular range of maximum 30°.

3. Hob apparatus according to one of the preceding claims, **characterised in that** the fixing unit (18a-b) has at least one fixing element (20a-b) which is arranged on the at least one heating element (12a-b) and penetrates the at least one space dividing element (16a-b) at least in part in the locked state.

4. Hob apparatus according to claim 3, **characterised in that** the at least one fixing element (20a-b) is embodied at least essentially in one piece with the at least one heating element (12a-b).

5. Hob apparatus at least according to claim 3, **characterised in that** the at least one space dividing element (16a-b) has at least one recess (22a-b) for accommodating the at least one fixing element (20a-b).

6. Hob apparatus according to one of the preceding claims, **characterised in that** the at least one heating element (12a-b) comprises at least one stabilisation element (24a-b), which is provided for stabilisation of a fixing between the at least one heating element (12a-b) and the at least one space dividing element (16a-b).

7. Hob apparatus according to one of the preceding claims, **characterised in that** the fixing unit (18a-b) has at least one protection element (26a-b), which is provided in the assembled state to secure a target position of the at least one heating element (12a-b) and of the at least one space dividing element (16a-b) relative to each other.

8. Hob apparatus according to one of the preceding claims, **characterised in that** the at least one space dividing element (16a-b) is embodied as a shielding element.

9. Hob, in particular induction hob, with at least one hob apparatus (10) according to one of claims 1 to 8.

10. Method for the assembly of a hob apparatus (10) according to one of claims 1 to 8, in which the at least one heating element (12a-b) and the at least one space dividing element (16a-b) are locked to each other.

## Revendications

1. Système de table de cuisson, en particulier système de table de cuisson à induction, avec au moins un élément chauffant (12a-b) qui est prévu pour réchauffer un ustensile de cuisson, avec au moins un élément de séparation d'espace (16a-b) qui est prévu dans une position de montage pour supporter l'au moins un élément chauffant (12a-b), et avec une unité de fixation (18a-b) qui est prévue pour fixer l'au moins un élément chauffant (12a-b) et l'au moins un élément de séparation d'espace (16a-b) l'un à l'autre, dans lequel l'unité de fixation (18a-b) est réalisée au moins en partie en tant qu'unité de verrouillage, **caractérisé en ce que** l'unité de fixation (18a-b) est prévue pour fixer l'un à l'autre l'au moins un élément chauffant (12a-b) et l'au moins un élément de séparation d'espace (16a-b) par le biais d'un mouvement de rotation de l'au moins un élément chauffant (12a-b) et de l'au moins un élément de séparation d'espace (16a-b) l'un par rapport à l'autre.

2. Système de table de cuisson selon la revendication 1, **caractérisé en ce que** le mouvement de rotation est limité à une plage angulaire de 30° au maximum.

3. Système de table de cuisson selon l'une des revendications précédentes, **caractérisé en ce que** l'unité de fixation (18a-b) présente au moins un élément de fixation (20a-b) qui est disposé au niveau de l'au moins un élément chauffant (12a-b) et à l'état verrouillé s'enclenche au moins en partie par le biais de l'au moins un élément de séparation d'espace (16a-b).

4. Système de table de cuisson selon la revendication 3, **caractérisé en ce que** l'au moins un élément de fixation (20a-b) est réalisé au moins pour l'essentiel d'un seul tenant avec l'au moins un élément chauffant (12a-b).

5. Système de table de cuisson selon au moins la revendication 3, **caractérisé en ce que** l'au moins un élément de séparation d'espace (16a-b) présente au moins une cavité (22a-b) destinée à loger l'au moins un élément de fixation (20a-b).

6. Système de table de cuisson selon l'une des revendications précédentes, **caractérisé en ce que** l'au moins un élément chauffant (12a-b) comprend au moins un élément de stabilisation (24a-b) qui est prévu pour stabiliser une fixation entre l'au moins un élément chauffant (12a-b) et l'au moins un élément de séparation d'espace (16a-b).

7. Système de table de cuisson selon l'une des revendications précédentes, **caractérisé en ce que** l'unité de fixation (18a-b) présente au moins un élément de protection (26a-b) qui est prévu pour sécuriser à l'état monté une position théorique de l'au moins un élément chauffant (12a-b) et de l'au moins un élément de séparation d'espace (16a-b) l'un par rapport à l'autre.

8. Système de table de cuisson selon l'une des revendications précédentes, **caractérisé en ce que** l'au moins un élément de séparation d'espace (16a-b) est réalisé en tant qu'élément de blindage.

9. Table de cuisson, en particulier table de cuisson à induction, avec au moins un système de table de cuisson (10) selon l'une des revendications 1 à 8.

10. Procédé destiné au montage d'un système de table de cuisson (10) selon l'une des revendications 1 à 8, dans lequel l'au moins un élément chauffant (12a-b) et l'au moins un élément de séparation d'espace (16a-b) sont verrouillés l'un à l'autre.
